# EUROPÄISCHE PATENTSCHRIFT

(11) **EP 1 685 046 B1**
(45) Veröffentlichungstag und Bekanntmachung des Hinweises auf die Patenterteilung: **27.02.2008**
(21) Anmeldenummer: 04802711.4
(22) Anmeldetag: 11.11.2004
(51) Int. Cl.: B65G 54/02

(54) **VORRICHTUNG ZUM BERÜHRUNGSLOSEN TRANSPORTIEREN VON FLACHELEMENTEN**
DEVICE FOR THE CONTACTLESS TRANSPORT OF FLAT ELEMENTS
DISPOSITIF DE TRANSPORT, MANIPULATION ET STOCKAGE DE COMPOSANTS ET MATERIAUX SANS CONTACT

(30) Priorität: 11.11.2003 DE 10352944
(43) Veröffentlichungstag der Anmeldung: 02.08.2006
(73) Patentinhaber: Zimmermann & Schilp Handhabungstechnik GmbH, 93055 Regensburg (DE)
(72) Erfinder: ZIMMERMANN, Josef, 93047 Regensburg (DE); ZITZMANN, Adolf, 92552 Teunz (DE); SCHILP, Michael, 85748 Garching (DE); BOLIG, Tobias, 80805 München (DE)
(74) Vertreter: Müller, Thomas
(86) Internationale Anmeldenummer: PCT/DE2004/002494
(87) Internationale Veröffentlichungsnummer: WO 2005/047148

(56) Entgegenhaltungen:
- EP-A- 0 471 495
- US-A- 5 810 155
- US-A1- 2002 046 606
- US-A1- 2002 088 693

## Beschreibung

Die vorliegende Erfindung betrifft eine Vorrichtung zum berührungslosen oder berührungsarmen Transportieren von Bauteilen oder Materialien entlang einer Transportbahn. Weiterhin betrifft die Erfindung eine Vorrichtung zum berührungslosen oder berührungsarmen Handhaben und Lagern von Bauteilen oder Materialien.

Um Teile oder Materialien berührungslos oder berührungsarm zu bewegen oder zu halten, sind aus dem Stand der Technik verschiedene Technologien bekannt. Weit verbreitet sind z. B. Transporteinrichtungen, die magnetische Abstoßungskräfte oder Luftpolster nutzen. Luftpolster können mittels Düsenplatten, aus denen Luft ausströmt, erzeugt werden. Eine andere Technologie zur Erzeugung von Luftpolstern ist die Nutzung von Schallwellen.

Aus dem Patentdokument US 5,810,155 ist eine Transportvorrichtung bekannt, die nach dem Schalldruckprinzip arbeitet. Weitere Hinweise zu den Themen Schalldruck und akustische Levitation sind aus der nachfolgend genannten Literatur entnehmbar:
- Lierke, E. G.:: Vergleichende Betrachtung zur berührungslosen Positionierung von Einzeltropfen in aerodynamischen, akustischen undelektrischen Kraftfeldern. In: Forschung im Ingenieurwesen, Bd. 61 (1995) 7/8, S. 201-216.
- Lierke E. G.:: Akustische Positionierung - Ein umfassender Überblick überGrundlagen und Anwendungen. In: Acustica 82 (1996), S. 220-237.

Die Vorrichtung nach US 5,810,155 weist eine Förderschiene auf, an deren Anfangsabschnitt ein Schwingungserzeuger (Quelle) angekoppelt ist, der den Anfangsabschnitt der Förderschiene so anregt, daß eine Wanderwelle entsteht. Die so initiierte Wanderwelle breitet sich in Förderrichtung entlang der Förderschiene aus. Am Endabschnitt der Förderschiene ist eine Vorrichtung (Senke) zur Umwandlung der mechanischen Energie der Wanderwelle in elektrische Energie vorgesehen. Diese Vorrichtung verhindert somit eine Reflexion und damit ein Zurücklaufen der Wanderwelle.

Wenn auf der Förderschiene Gegenstände liegen, werden diese durch das von der Wanderwelle erzeugte wandernde Luftpolster zwischen der Förderschiene und der Grundfläche des zu befördernden Gegenstandes entlang der Förderschiene in Richtung der Senke bewegt. Versuche haben ergeben, daß es prinzipiell möglich ist, mit dieser Vorrichtung Gegenstände zu transportieren.

Weitere Konstruktionen zum Stand der Technik sind aus den Dokumenten DE 19916922, DE 19916923, DE 19916856 und DE 19916872 entnehmbar.

Alle bisher bekannt gewordenen Konstruktionen der Schallevitation im Nahfeld basieren darauf, daß ein Bauteil auf einer schwingenden und somit Schall abstrahlenden Oberfläche berührungsfrei getragen wird, d. h. schwebt. Dazu ist es erforderlich, diese Oberfläche zum Schwingen anzuregen. Es ist dem Fachmann bekannt, daß das Schwingungsverhalten eines festen Körpers hauptsächlich durch das Material und dessen Abmessungen, d. h. der Form, bestimmt wird. Wenn z. B. für ein Transportsystem eine Transportbahn zum Transport flacher Bauteile konstruiert werden soll, muß diese Transportbahn einerseits als schwingungsfähiges System ausgelegt werden, andererseits jedoch konstruktive Randbedingungen erfüllen, die durch die räumlichen Erfordernisse des gesamten Transportsystems vorgegeben sind. Es besteht daher ein Zielkonflikt darin, daß eine Vorrichtung zum berührungslosen Transportieren, Lagern oder Handhaben nach dem Prinzip der Schallevitation eine vorbestimmte geometrische Form und vorbestimmte Abmessungen aufweisen muß, um die erforderlichen Schwingungseigenschaften zur Levitationserzeugung zu erzielen, und in der Regel eine völlig andere geometrische Form haben sollte, um den Anforderungen als Transportbahn, Lagervorrichtung oder Halte- oder Handhabevorrichtung hinsichtlich der Dimensionierung oder z. B. des Gewichts zu genügen.

Zur Verdeutlichung dieses Problems wird darauf hingewiesen, daß z. B. eine Transportschiene, bei der das Luftpolster durch Luftdüsen erzeugt wird, dieser Einschränkung nicht unterliegt, da die Luft über nahezu frei gestaltbare Luftkanäle zu den Düsen geleitet werden kann, die ebenfalls in nahezu frei wählbaren Positionen angeordnet werden können. Da jedoch die bei gasförmigen Medien unvermeidbaren Strömungseffekte bei bestimmten Technologien unerwünscht sind, können diese Systeme nicht überall eingesetzt werden.

Es ist daher die Aufgabe der Erfindung, eine Levitationstechnologie mittels Schallschwingungen bereitzustellen, die die Nachteile der vorstehend aufgeführten Technologien vermeidet.

Diese Aufgabe wird mit einer Vorrichtung nach Anspruch 1 und einem Verfahren nach Anspruch 17 gelöst.

Es wurde eine Vorrichtung zum Erzeugen eines Schwebezustandes eines Gegenstands durch Schallevitation geschaffen, wobei der Gegenstand wenigstens einen Flächenabschnitt aufweisen muß, der für eine Schallevitation geeignet ist. Das ist vorzugsweise eine harte (schallreflektierende) Fläche, wobei dieser harte Flächenabschnitt über einer schallabstrahlenden Fläche schwebt. Es ist jedoch auch möglich, pulverförmige Stoffe oder Granulate zu levitieren, wobei aber in diesem Fall kein vollkommen berührungsfreier Schwebezustand erreichbar ist. Erfindungsgemäß weist die Vorrichtung eine starre Stützkonstruktion auf. Diese Stützkonstruktion kann aus frei wählbaren Materialien bestehen, wie z. B. Metall, Kunstoff, Glas, Keramik oder Verbundmaterialien. Auch das Herstellungsverfahren ist frei wählbar, so daß z. B. auch Gieß- und Spritzgießverfahren anwendbar sind. Eine entscheidende Voraussetzung ist, daß die Stützkonstruktion zur Aufnahme von Kräften geeignet ist, die durch Gravitation oder Beschleunigung des schwebenden Gegenstandes auf die Stützkonstruktionsoberfläche einwirken. Weiterhin muß die Stützkonstruktionsoberfläche materialbeständig gegenüber den dynamischen Belastungen durch Levitationsschallwellen sein, die zur Levitation des Gegenstandes oder des Stoffes dienen. Parallel zu der Stützkonstruktionsoberfläche ist ein dünnes schwingungsfähiges Flächenelement angeordnet. Weiterhin sind Schwingungserzeugungsmittel vorgesehen, um dieses Flächenelement derart in Schwingungen zu versetzen, daß es berührungslos über der Stützkonstruktionsoberfläche schwebt. Die Erzeugung der Schwingungen kann auf unterschiedlichste Weise erfolgen, z. B. durch externe oder durch interne Anregung. Als Material für das Flächenelement sind grundsätzlich alle Werkstoffe mit hoher Elastizität und Härte geeignet, wie z. B. Stahlblech, Bleche aus Nichteisenmetallegierungen, Kunststoffe oder auch Verbundmaterialien, soweit diese extern angeregt werden. Als Material zur inneren Anregung steht z. B. Folie zur Verfügung, die den inversen piezoelektrischen Effekt zur Erzeugung von Schwingungen nutzt. Die Form der Stützkonstruktionsoberfläche muß nicht notwendigerweise plan sein.

Durch die erfindungsgemäße Trennung der Funktionen "Tragen" und "Schwingen" wurde in der Technologie der Schallevitation ein Paradigmenwechsel erreicht. Es ist erstmalig möglich z. B. eine Transportbahn ohne Rücksicht auf deren Schwingungsverhalten zu konstruieren. Somit ist es möglich, eine Transportbahn hinsichtlich unterschiedlichster Randbedingungen zu optimieren, wie z. B. Gewicht, Resistenz gegenüber aggressiven Medien, Materialkosten usw. Auch bei der Wahl des Materials für das schwingende Flächenelement unterliegt der Konstrukteur nur wenigen Beschränkungen und hat eine große Auswahl an Materialien und Technologien.

Ein besonderer Vorteil besteht bei solchen Anwendungen oder Technologien, bei denen standardisierte räumliche Verhältnisse vorliegen. Eine typische Technologie hierfür ist die Waferfertigung. Mit der vorliegenden Erfindung ist es somit erstmals möglich, Vorrichtungen bereitzustellen, die an die vorgegebenen räumlichen Verhältnisse dieser Technologie angepaßt werden können.

Nach Anspruch 2 ist das schwingungsfähige Flächenelement ein Metallblech oder eine Kunststoffplatte mit vergleichbaren Schwingungseigenschaften. Das Schwingungserzeugungsmittel ist eine Vorrichtung zur Erzeugung mechanischer Schwingungen, die auf das Metallblech oder auf die Kunststoffplatte übertragen werden.

Nach Anspruch 3 ist das Flächenelement eine elektrisch angeregte Piezofolie. Folien, die den inversen piezoelektrischen Effekt zur Erzeugung mechanischer Dickenschwingungen nutzen, sind dem Fachmann bekannt, so daß zur zweckentsprechenden Auswahl einer Piezofolie für eine vorgesehene technologische Anwendung keine erfinderische Tätigkeit erforderlich ist. Der Vorteil dieser Folien besteht besonders darin, daß die Schwingungsfrequenz in einem sehr weiten Bereich elektrisch einstellbar ist.

Nach Anspruch 4 ist das Flächenelement eine magnetostriktiv angeregte Materialfolie. Die Erzeugung elastischer Verformungen magnetostriktiver Materialien im Magnetfeld ist dem Fachmann ebenfalls bekannt. Bei dieser Anwendung sind Elektromagnete vorzugsweise in die Stützkonstruktion integriert, die aus nichtmagnetischem Material besteht.

Nach Anspruch 5 ist das Flächenelement eine elektrostriktiv angeregte Materialfolie, wobei das Material elektrostriktive Eigenschaften aufweist und eine Vorrichtung zur elektrostriktiven Anregung vorgesehen ist.

Nach Anspruch 6 erfolgt die Einkopplung der Schwingungen mittels einer mechanisch starren Koppelvorrichtung. Es ist besonders vorteilhaft, daß mit einer einzigen Vorrichtung gleichzeitig mehrere Flächenelemente zum Schwingen angeregt werden können.

Nach Anspruch 7 erfolgt die Einkopplung nicht direkt, sondern erfolgt über ein Zwischenmedium.

Nach Anspruch 8 ist das Zwischenmedium gasförmig, d. h., ein strömendes Gas erzeugt z. B. in Kontakt mit Randabschnitten des Flächenelements Schwingungen.

Nach Anspruch 9 ist das Zwischenmedium flüssig, d. h., eine strömende Flüssigkeit erzeugt z. B. in Kontakt mit Randabschnitten des Flächenelements Schwingungen.

Nach Anspruch 10 wird das Flächenelement so angesteuert, das es mit unterschiedlicher Frequenz und/oder Amplitude schwingt. Durch diese Maßnahme können z. B. Amplitudenüberhöhungen erzeugt werden, die den auf einer Transportstrecke geradlinig bewegten Gegenstand zu einer Richtungsänderung zwingen.

Nach Anspruch 11 sind mehrere Flächenelemente angeordnet und selektiv ansteuerbar. Wenn z. B. in einer Transportstrecke mehrere Flächenelemente in einer Ebene und in Richtung der Transportstrecke angeordnet sind, kann durch unterschiedliche Ansteuerung der Flächenelemente ebenfalls eine Richtungsänderung erzwungen werden, so daß eine Weichenfunktion erzielt wird.

Nach Anspruch 12 ist in der Stützkonstruktionsoberfläche wenigstens eine Luft- oder Gasansaugöffnung vorgesehen. In dem Flächenelement ist auch wenigstens ein Loch angeordnet, wobei das Loch der Ansaugöffnung nicht deckungsgleich in Gegenüberlage ist. Wenn an die Ansaugöffnung ein Unterdruck angelegt ist, wird das Flächenelement vom äußeren Luftdruck gegen die Stützkonstruktionsoberfläche gedrängt. Dabei legt sich das dünne und biegsame Flächenelement an die Kontur der Stützkonstruktionsoberfläche an und wird dadurch örtlich stabilisiert. Durch die Schwingungsbewegung des Flächenelements wird jedoch ein direkter Kontakt mit der Stützkonstruktionsoberfläche verhindert, so daß auch bei dieser Ausführungsform das Flächenelement parallel zur Oberfläche der Stützkonstruktion schwebt. Da in dem Flächenelement ebenfalls wenigstens ein Loch vorgesehen ist, ist diese Ausführungsform z. B. als Greifer gut geeignet, da ein flaches Bauteil von oben erfaßt, d. h. angesaugt werden kann.

Wenn in dem Flächenelement keine Löcher vorgesehen werden, ist diese Ausführungsform besonders dafür geeignet, Transportbahnen auszubilden, die keine plane Oberfläche aufweisen.

Nach Anspruch 13 wird eine Vorrichtung zum Transportieren unter Verwendung der Vorrichtungen nach den Ansprüchen 1 bis 12 beansprucht, wobei unter Transportieren das Bewegen von Gegenständen auf einer waagerechten oder leicht geneigten Bahn von A nach B verstanden wird.

Nach Anspruch 14 wird eine Vorrichtung zum Greifen unter Verwendung der Vorrichtungen nach den Ansprüchen 1 bis 12 beansprucht, wobei unter Greifen das Aufnehmen, Transportieren und Ablegen von Bauteilen verstanden wird. Eine solche Vorrichtung kann z. B. in einem Mehrgelenkroboter integriert sein.

Nach Anspruch 15 wird eine Lager- und Haltevorrichtung unter Verwendung der Vorrichtungen nach den Ansprüchen 1 bis 12 beansprucht. Damit ist es z. B. möglich, Teile berührungslos zwischenzulagern, bis sie darauffolgend dem nächsten Bearbeitungsschritt zügeführt werden.

Nach Anspruch 16 wird unter Verwendung der Vorrichtungen nach den Ansprüchen 1 bis 12 ein Lager bereitgestellt, in dem sich berührungslos eine Welle dreht. Dazu ist die Stützkonstruktion als Rohr ausgebildet. Das Flächenelement liegt an der Innenwandung des Rohres an, ohne diese zu berühren.

Nach Anspruch 17 wird ein Verfahren zum Erzeugen eines Schwebezustandes durch Schallevitation für einen Gegenstand beansprucht, der wenigstens einen Flächenabschnitt aufweist, der für eine Schallevitation geeignet ist, wobei dieser Flächenabschnitt über einer schallabstrahlenden Fläche schwebt, wobei das Verfahren nachfolgende Verfahrensschritte aufweist:
- Bereitstellen einer starren Stützkonstruktion mit einer Stützkonstruktionsoberfläche zur Aufnahme von Kräften, die durch Gravitation oder Beschleunigung des schwebenden Gegenstandes senkrecht zu der Stützkonstruktionsoberfläche wirken,
- Bereitstellen eines dünnen schwingungsfähigen Flächenelements, das parallel zu der Stützkonstruktionsoberfläche angeordnet ist,
- Bereitstellen von Schwingungserzeugungsmitteln, um das dünne schwingungsfähige Flächenelement in solche Schwingungen zu versetzen, daß das Flächenelement berührungslos über der Stützkonstruktionsoberfläche schwebt und der Gegenstand über dem Flächenelement schwebt.

Die Erfindung wird nachfolgend anhand von Ausführungsbeispielen in Verbindung mit den beigefügten schematischen Zeichnungen näher erläutert.
- Fig. 1: zeigt eine erste Ausführungsform der Erfindung.
- Fig. 2: zeigt eine zweite Ausführungsform der Erfindung.
- Fig. 3: zeigt eine dritte Ausführungsform der Erfindung.
- Fig. 4: zeigt eine vierte Ausführungsform der Erfindung.
- Fig. 5: zeigt eine fünfte Ausführungsform der Erfindung.
- Fig. 6: zeigt eine sechste Ausführungsform der Erfindung.
- Fig. 7: zeigt eine siebente Ausführungsform der Erfindung.

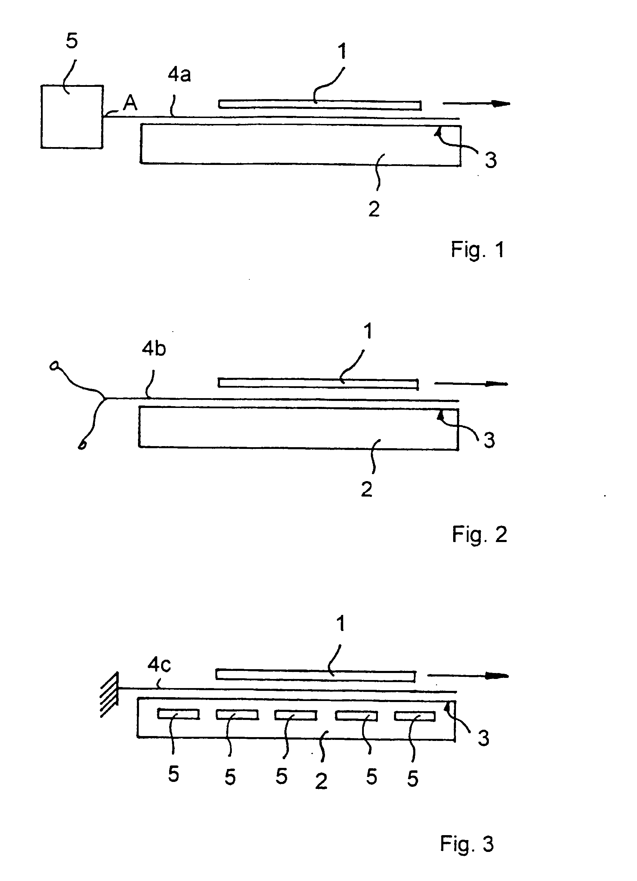

Die Fig. 1 ist die Seitenansicht einer waagerechten Transportbahn, auf der eine flache Scheibe 1 in Pfeilrichtung zu befördern ist. Eine Stützkonstruktion 2 mit einer Stützkonstruktionsoberfläche 3 ist so ausgelegt, daß das Gewicht der Scheibe 1 oder eine andere Einwirkung die Stützkonstruktion 2 nicht verformt, d. h., die Stützkonstruktion 2 ist starr ausgebildet. Über der Stützkonstruktionsoberfläche 3 ist ein 0,05 mm dickes Federstahlblech 4a angeordnet, das im Ruhezustand auf der Stützkonstruktionsoberfläche 3 aufliegt. An einem Abschnitt A ist das Blech mit einem Schwingungserzeuger 5 mechanisch starr verbunden. Wenn das Federstahlblech 4 mittels eines Schwingungsgenerators bei einer Frequenz von 30 kHz zum Schwingen angeregt wird, löst es sich von der Stützkonstruktionsoberfläche 3 und schwebt über dieser berührungslos in ca. 0,02 mm Abstand. Die erforderliche Frequenz wählt der Fachmann unter Berücksichtigung der Geometrie und der Materialeigenschaften des Bleches aus. Wenn auf das Blech ein Wafer gelegt wird, schwebt er berührungslos und kann mittels verschiedener, aus dem Stand der Technik bekannter Beschleunigungsmittel bewegt werden. Solche Beschleunigungsmittel sind z. B. die Gravitationskraft bei geneigter Transportbahn oder Anstrahlen mit Schall.

Die Fig. 2 weist den gleichen Aufbau wie Fig. 1 auf. Anstelle des Federstahlbleches ist eine Piezofolie 4b eingesetzt, deren Oberfläche metallisiert ist. Piezofolien gibt es in starrer keramischer Ausführung und aus Polymerwerkstoff. An der metallisierten Oberfläche sind elektrische Anschlüsse angeordnet, die mit einem Frequenzgenerator verbunden sind. Der Vorteil von Polymerpiezofolie ist der große frei wählbare Frequenzbereich der Dikkenschwingungen.

Die Fig. 3 weist ebenfalls den gleichen Aufbau wie Fig. 1 auf. Anstelle des Federstahlbleches ist eine Folie 4c aus magnetostriktivem Material eingesetzt. In der Stützkonstruktion aus Kunststoff sind Magnetspulen 5 so integriert, daß ein durch Stromfluß erzeugtes magnetisches Wechselfeld die Folie zum Schwingen anregt.

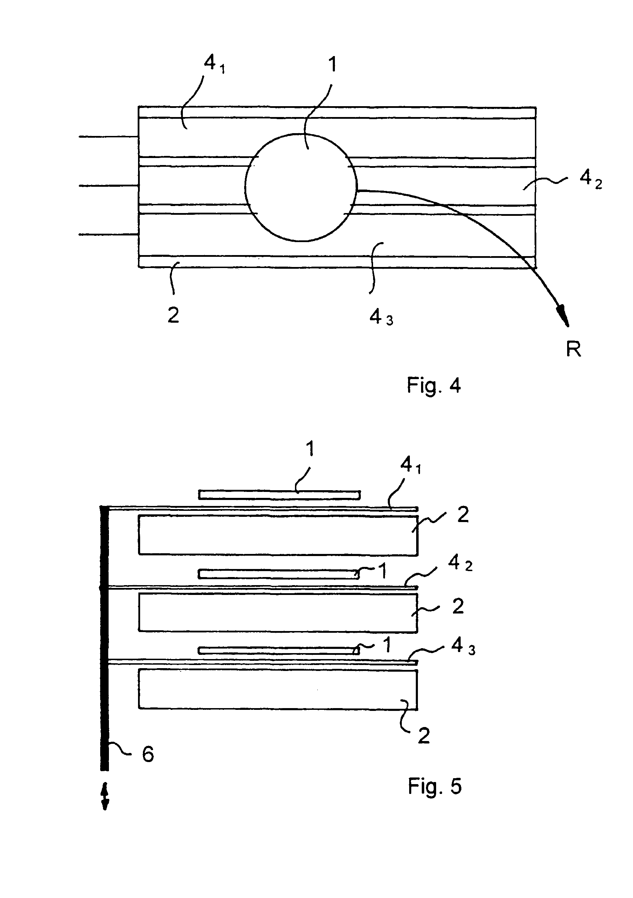

Die Fig. 4 zeigt die Draufsicht einer Transportbahn nach Fig. 1, jedoch mit drei Federstahlblechen 4₁, 4₂, 4₃, die separat angesteuert werden. Diese Anordnung kann sowohl als Führung als auch als Weiche dienen. Wenn die Bleche 4a und 4c stärker schwingen als das Blech 4b, wird die Scheibe 1 zentriert und entlang der Bahnmitte ohne äußere Anschläge geführt. Wenn das Blech 4a stärker schwingt als das Blech 4b und auch das Blech 4b stärker schwingt als das Blech 4c, gleitet die Scheibe in Pfeilrichtung R von der Bahn, so daß eine Weichenfunktion realisiert wird.

Die Fig. 5 zeigt eine Haltevorrichtung für drei übereinander zu haltende bzw. zu lagernde Scheiben. Die Stützkonstruktion weist drei Etagen auf, und die Bleche 4₁, 4₂, 4₃ sind über eine Koppelvorrichtung 6 mit einem Schwingungsgenerator verbunden. Mittels dieser Vorrichtung können die Scheiben bis zum nächsten Bearbeitungsschritt zwischengelagert werden.

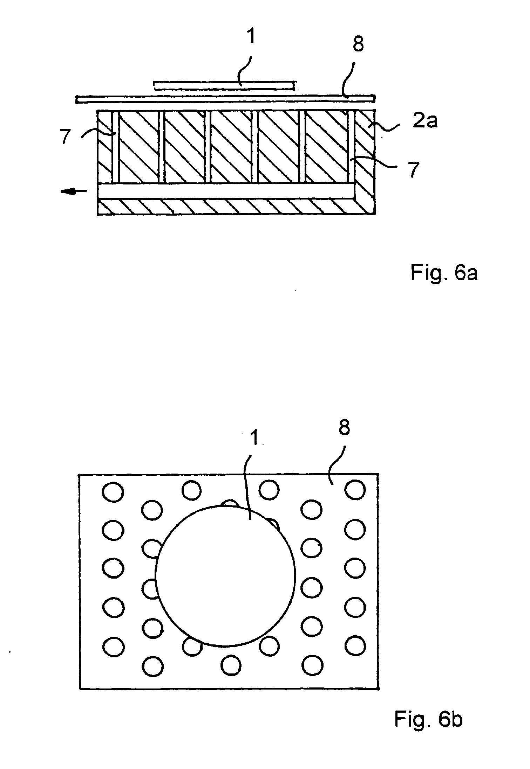

Die Figuren 6a, 6b zeigen jeweils die Seitenansicht und die Draufsicht einer Greifvorrichtung mit einer Stützkonstruktion 2a, die Ansauglöcher 7 aufweist. Über der Stützkonstruktion ist ein Lochblech 8 angeordnet. Wenn die Greifvorrichtung aktiviert wird, wird vorzugsweise zuerst der Schwingungsgenerator eingeschaltet, so daß das Lochblech 8 in den Schwebezustand gelangt. Dann wird an die Ansauglöcher 7 ein Unterdruck angelegt, so daß das Lochblech in Richtung Stützkonstruktionsoberfläche gedrängt wird. Das Ansaugen bewirkt also eine Fixierung des beabstandet schwingenden Lochblechs 8 in Gegenüberlage der Stützkonstruktionsoberfläche. Wenn eine Scheibe 1 auf dem Lochblech 8 berührungslos schwebt, wird diese nach dem gleichen Prinzip, nach dem das Lochblech 8 fixiert wird, ebenfalls fixiert. Diese Greifvorrichtung kann in einem Mehrgelenkroboter eingesetzt werden, so daß die Scheibe in frei wählbaren Raumbahnen bewegbar ist. Durch spezielle Ausbildung der Strömungsverhältnisse kann auf eine seitliche Fixierung der Scheibe verzichtet werden.

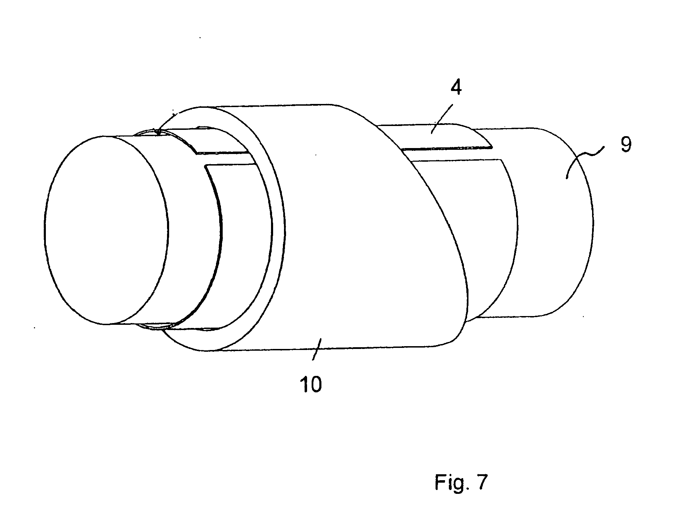

Die Fig. 7 zeigt ein Lager, in dem sich eine Welle berührungslos dreht. Dazu ist die Stützkonstruktion als Rohr 10 ausgebildet. Das Flächenelement 4 liegt an der Innenwandung des Rohres 10 an.

Es ist klar, daß sich nach diesem Prinzip auch eine geschlossene (rohrförmige) Transportstrecke für Materialien aufbauen läßt, wodurch z. B. bei pulverförmigen Stoffen ein sehr geringer Reibungswiderstand an der Rohrwandung ermöglicht wird.

## Patentansprüche

1. Vorrichtung zum Erzeugen eines Schwebezustands durch Schallevitation eines Gegenstands **(1),** der wenigstens einen Flächenabschnitt aufweist, der für eine Schallevitation geeignet ist, wobei dieser Flächenabschnitt über einer schallabstrahlenden Fläche schwebt, **dadurch gekennzeichnet, daß** die Vorrichtung nachfolgende Merkmale aufweist:
- eine starre Stützkonstruktion **(2)** mit einer Stützkonstruktionsoberfläche **(3)** zur Aufnahme von Kräften, die durch Gravitation oder Beschleunigung des schwebenden Gegenstandes senkrecht zu der Stützkonstruktionsoberfläche **(3)** wirken,
- ein dünnes schwingungsfähiges Flächenelement **(4),** das parallel zu der Stützkonstruktionsoberfläche **(3)** angeordnet ist,
- Schwingungserzeugungsmittel **(5)**, um das dünne schwingungsfähige Flächenelement **(4)** in solche Schwingungen zu versetzen, daß das Flächenelement **(4)** berührungslos über der Stützkonstruktionsoberfläche **(3)** schwebt und der Gegenstand **(1)** über dem Flächenelement **(4)** schwebt.

2. Vorrichtung nach Anspruch 1, **dadurch gekennzeichnet, daß** das dünne schwingungsfähige Flächenelement **(4)** ein Metallblech **(4a)** oder eine Kunststoffplatte mit vergleichbaren Schwingungseigenschaften ist und das Schwingungserzeugungsmittel eine Vorrichtung zur Erzeugung mechanischer Schwingungen ist, die mit dem Metallblech oder mit der Kunststoffplatte so gekoppelt ist, daß die Schwingungen auf das Metallblech oder auf die Kunststoffplatte übertragen werden.

3. Vorrichtung nach Anspruch 1, **dadurch gekennzeichnet, daß** das dünne schwingungsfähige Flächenelement eine elektrostriktiv anregbare Piezofolie **(4b)** ist.

4. Vorrichtung nach Anspruch 1, **dadurch gekennzeichnet, daß** das dünne schwingungsfähige Flächenelement eine magnetostriktiv anregbare Materialfolie **(4c)** ist, wobei das Material magnetostriktive Eigenschaften aufweist und eine Vorrichtung zur magnetostriktiven Anregung vorgesehen ist.

5. Vorrichtung nach Anspruch 1, **dadurch gekennzeichnet, daß** das dünne schwingungsfähige Flächenelement **(4)** eine elektrostriktiv anregbare Materialfolie ist, wobei das Material elektrostriktive Eigenschaften aufweist und eine Vorrichtung zur elektrostriktiven Anregung vorgesehen ist.

6. Vorrichtung nach Anspruch 2, **dadurch gekennzeichnet, daß** die Ankopplung mittels einer mechanisch starren Koppelvorrichtung erfolgt.

7. Vorrichtung nach Anspruch 2, **dadurch gekennzeichnet, daß** die Ankopplung über ein Zwischenmedium erfolgt.

8. Vorrichtung nach Anspruch 7, **dadurch gekennzeichnet, daß** das Zwischenmedium gasförmig ist.

9. Vorrichtung nach Anspruch 7, **dadurch gekennzeichnet, daß** das Zwischenmedium flüssig ist.

10. Vorrichtung nach einem der vorhergehenden Ansprüche, **dadurch gekennzeichnet, daß** das dünne schwingungsfähige Flächenelement **(4)** so angesteuert wird, das es mit unterschiedlichen Frequenzen und/oder Amplituden schwingt.

11. Vorrichtung nach einem der vorhergehenden Ansprüche, **dadurch gekennzeichnet, daß** mehrere Flächenelemente **(4)** angeordnet und selektiv ansteuerbar sind.

12. Vorrichtung nach einem der vorhergehenden Ansprüche, **dadurch gekennzeichnet, daß** in der Stützkonstruktionsoberfläche wenigstens eine Luft- oder Gasansaugöffnung **(7)** vorgesehen ist und in dem Flächenelement **(8)** wenigstens ein Loch angeordnet ist, wobei die Ansaugströmungsverhältnisse so eingestellt sind, daß der Gegenstand über dem Loch angesaugt wird und von dem Luftfilm des schwingenden Flächenelements in einem vorbestimmten Abstand zur Oberfläche des Flächenelements gehalten wird.

13. Vorrichtung zum Transportieren unter Verwendung der Vorrichtungen nach den Ansprüchen 1 bis 12.

14. Greifvorrichtung unter Verwendung der Vorrichtungen nach den Ansprüchen 1 bis 1 2.

15. Lager- und Haltevorrichtung unter Verwendung der Vorrichtungen nach den Ansprüchen 1 bis 12.

16. Lager unter Verwendung der Vorrichtungen nach den Ansprüchen 1 bis 12, wobei die Stützkonstruktion ein Rohr **(10)** ist.

17. Verfahren zum Erzeugen eines Schwebezustandes durch Schallevitation eines Gegenstands **(1),** der wenigstens einen Flächenabschnitt aufweist, der für eine Schallevitation geeignet ist, wobei dieser Flächenabschnitt über einer schallabstrahlenden Fläche schwebt, **dadurch gekennzeichnet, daß** das Verfahren nachfolgende Verfahrensschritte aufweist:
- Bereitstellen einer starren Stützkonstruktion **(2)** mit einer Stützkonstruktionsoberfläche zur Aufnahme von Kräften, die durch Gravitation oder Beschleunigung des schwebenden Gegenstandes senkrecht zu der Stützkonstruktionsoberfläche wirken,
- Bereitstellen eines dünnen schwingungsfähigen Flächenelements **(4),** das parallel zu der Stützkonstruktionsoberfläche **(3)** angeordnet ist,
- Bereitstellen von Schwingungserzeugungsmitteln **(5),** um das dünne schwingungsfähige Flächenelement **(4)** in solche Schwingungen zu versetzen, daß das Flächenelement **(4)** berührungslos über der Stützkonstruktionsoberfläche schwebt und der Gegenstand **(1)** über dem Flächenelement **(4)** schwebt.

## Claims

1. Device for putting an object **(1)** into a levitating state by sound levitation, wherein the object comprises at least one surface portion suited for sound levitation and arranged opposite to a surface emitting sounds so that the object levitates above the sound emitting surface, **characterized in that** the device comprises the following features:
- a rigid support structure **(2)** having a supporting surface **(3)** for receiving forces generated by gravitation or acceleration of the levitating object and acting perpendicularly to the supporting surface **(3),**
- a thin oscillatory surface element arranged in parallel with the supporting surface **(3)** of the support structure **(2),**
- means **(5)** for generating oscillations which make the thin oscillatory surface element oscillate so that it levitates in a non-contact way above the supporting surface **(3)** and the object **(1)** levitates above the surface element **(4).**

2. Device according to claim 1, **characterized in that** the thin oscillatory surface element **(4)** is a sheet metal **(4a)** or a plastic plate comprising oscillating properties comparable with those of the sheet metal, and the means **(5)** for generating mechanical oscillations are coupled to the sheet metal or the plastic plate so that the oscillations are transmitted to it.

3. Device according to claim 1, **characterized in that** the thin oscillatory surface element is made of a piezoelectric foil **(4b)** excitable electrostrictively.

4. Device according to claim 1, **characterized in that** the thin oscillatory surface element is made of a foil **(4c),** the material of which comprising magnetostrictive properties, and a unit for magnetostrictive excitation is provided.

5. Device according to claim 1, **characterized in that** the thin oscillatory surface element is made of a foil, the material of which comprising electrostrictive properties, and a unit for electrostrictive excitation is provided.

6. Device according to claim 2, **characterized in that** coupling is performed by means of a mechanically rigid coupling arrangement.

7. Device according to claim 2, **characterized in that** coupling is performed through a intermediate medium.

8. Device according to claim 7, **characterized in that** the intermediate medium is a gas.

9. Device according to claim 7, **characterized in that** the intermediate medium is a liquid.

10. Device according to any of the preceding claims, **characterized in that** the thin oscillatory surface element **(4)** is driven so that it oscillates with different frequencies and/or amplitudes.

11. Device according to any of the preceding claims, **characterized in that** several surface elements are arranged, which can be driven selectively.

12. Device according to any of the preceding claims, **characterized in that** the supporting surface of the support structure is provided with at least one opening **(7)** for sucking in air or a gas and the surface element **(8)** is provided with at least one hole, wherein the suction ratios are adjusted so that the object is sucked above the hole and is kept at a predetermined distance to the surface element by the air film inter-between.

13. Apparatus for conveying objects by using a device according to any of the claims 1 to 12.

14. Gripping apparatus using a device according to any of the claims 1 to 12.

15. Storing and holding apparatus using a device according to any of the claims 1 to 12.

16. Bearing arrangement using a device according to any of the claims 1 to 12, wherein the support structure is a tube **(10)**.

17. Method for putting an object **(1)** into a levitating state by sound levitation, wherein the object comprises at least one surface portion suited for sound levitation and arranged opposite to a surface emitting sounds so that the object levitates above the sound emitting surface, **characterized in that** the method comprises the following steps:
- providing of a rigid support structure **(2)** having a surface **(3)** for receiving forces generated by gravitation or acceleration of the levitating object and acting perpendicularly to that surface,
- proving of a thin oscillatory surface element **(4)** arranged in parallel with the surface **(3)** of the support structure **(2),** and
- providing of means **(5)** for generating oscillations which make the thin oscillatory surface element **(4)** oscillate so that it levitates above the surface **(3)** of the support structure (2) in a none-contact way and the object **(1)** levitates above the surface element **(4)**.

## Revendications

1. Dispositif de génération d'un flottement par lévitation acoustique d'un objet (1), qui présente au moins une section de surface, qui convient à une lévitation acoustique, cette section de surface flottant au-dessus d'une surface de rayonnement acoustique, **caractérisé en ce que** le dispositif présente les caractéristiques suivantes :
- une construction support (2) rigide avec une surface de la construction support (3) servant à absorber des forces, qui agissent par gravitation ou accélération de l'objet flottant perpendiculairement à la surface de la construction support (3),
- un élément de surface (4) mince pouvant vibrer, qui est disposé parallèlement à la surface de la construction support (3),
- des moyens de génération de vibrations (5), pour faire osciller l'élément de surface (4) mince pouvant vibrer de sorte que l'élément de surface (4) flotte sans contact au-dessus de la surface de la construction support (3) et que l'objet (1) flotte au-dessus de l'élément de surface (4).

2. Dispositif selon la revendication 1, **caractérisé en ce que** l'élément de surface (4) mince pouvant vibrer est une tôle métallique (4a) ou une plaque de plastique avec des propriétés vibratoires comparables et le moyen de génération de vibrations est un dispositif permettant de générer des vibrations mécaniques, qui est couplé à la tôle métallique ou à la plaque de plastique de façon à transmettre les vibrations à la tôle métallique ou à la plaque de plastique.

3. Dispositif selon la revendication 1, **caractérisé en ce que** l'élément de surface mince pouvant vibrer est un film piézo (4b) pouvant être excité de manière électrostrictive.

4. Dispositif selon la revendication 1, **caractérisé en ce que** l'élément de surface mince pouvant vibrer est un film de matériau (4c) pouvant être excité de manière magnétostrictive, le matériau présentant des propriétés magnétostrictives et un dispositif d'excitation magnétostrictive étant prévu.

5. Dispositif selon la revendication 1, **caractérisé en ce que** l'élément de surface (4) mince pouvant vibrer est un film de matériau pouvant être excité de manière électrostrictive, le matériau présentant des propriétés électrostrictives et un dispositif d'excitation électrostrictive étant prévu.

6. Dispositif selon la revendication 2, **caractérisé en ce que** le couplage se fait au moyen d'un dispositif de couplage mécaniquement rigide.

7. Dispositif selon la revendication 2, **caractérisé en ce que** le couplage se fait par le biais d'un fluide intermédiaire.

8. Dispositif selon la revendication 7, **caractérisé en ce que** le fluide intermédiaire est gazeux.

9. Dispositif selon la revendication 7, **caractérisé en ce que** le fluide intermédiaire est liquide.

10. Dispositif selon l'une quelconque des revendications précédentes, **caractérisé en ce que** l'élément de surface (4) mince pouvant vibrer est excité de sorte qu'il vibre à différentes fréquences et/ou amplitudes.

11. Dispositif selon l'une quelconque des revendications précédentes, **caractérisé en ce que** plusieurs éléments de surface (4) sont disposés et peuvent être excités de manière sélective.

12. Dispositif selon l'une quelconque des revendications précédentes, **caractérisé en ce qu'**au moins une ouverture d'aspiration d'air ou de gaz (7) est prévue dans la surface de la construction support et au moins un trou est pratiqué dans l'élément de surface (8), les rapports de courant d'aspiration étant réglés de sorte que l'objet est aspiré au-dessus du trou et est maintenu par le film d'air de l'élément de surface vibrant à une distance prédéfinie par rapport à la surface de l'élément de surface.

13. Dispositif de transport utilisant les dispositifs selon les revendications 1 à 12.

14. Dispositif de saisie utilisant les dispositifs selon les revendications 1 à 12.

15. Dispositif de logement et de maintien utilisant les dispositifs selon les revendications 1 à 12.

16. Logement utilisant les dispositifs selon les revendications 1 à 12, la construction support étant un tube (10).

17. Procédé de génération d'un flottement par lévitation acoustique d'un objet (1), qui présente au moins une section de surface, qui convient à une lévitation acoustique, cette section de surface flottant au-dessus d'une surface de rayonnement acoustique, **caractérisé en ce que** le procédé comporte les étapes de procédé suivantes :
- mise à disposition d'une construction support (2) rigide avec une surface de la construction support servant à absorber des forces, qui agissent par gravitation ou accélération de l'objet flottant perpendiculairement à la surface de la construction support,
- mise à disposition d'un élément de surface (4) mince pouvant vibrer, qui est disposé parallèlement à la surface de la construction support (3),
- mise à disposition de moyens de génération de vibrations (5), pour faire osciller l'élément de surface (4) mince pouvant vibrer de sorte que l'élément de surface (4) flotte sans contact au-dessus de la surface de la construction support et que l'objet (1) flotte au-dessus de l'élément de surface (4).
